# DEMANDE DE BREVET EUROPEEN

(11) **EP 2 587 412 A1**
(43) Date de publication de la demande: **01.05.2013**
(21) Numéro de dépôt: 11306406.7
(22) Date de dépôt: 31.10.2011
(51) Int. Cl.: G06K 19/077

(54) **Carte à puce prédécoupée**

(71) Demandeur: Gemalto SA, 92190 Meudon (FR)
(72) Inventeur: Froger, Alexis, 92190 Meudon (FR); Renouard, Jérémy, 92190 Meudon (FR); Cogno, Georges, 92190 Meudon (FR)

(57) **Abrégé**

L'invention se rapporte à une carte SIM 2 d'un premier format et muni d'un module électronique 4. Le corps de carte comporte une ligne de prédécoupe 6 entourant le module électronique 4 afin de définir un deuxième format de carte 3. Ladite ligne de prédécoupe 6 comporte une épaisseur de matière résiduelle inférieure à l'épaisseur du corps de carte. L'épaisseur de matière résiduelle comporte une première épaisseur 9 sur une première partie de la ligne de prédécoupe 6, au moins une deuxième épaisseur 10 inférieure à la première épaisseur 9 sur une deuxième partie de la ligne de prédécoupe et au moins une zone 11, 17 de changement d'épaisseur résiduelle, ladite zone de changement d'épaisseur est une zone de changement d'épaisseur progressive 11, 17 pour passer de la première épaisseur à la deuxième épaisseur.

## Description

L'invention se rapporte à une carte à puce prédécoupée et plus particulièrement au profil de la prédécoupe.

Les cartes SIM (pour Subscriber Identity Module), également appelée UICC (pour Universal Integrated Circuit Card), sont des cartes à puce définies par le standard ETSI TS 102 221 de l'Institut Européen des standards de télécommunication (European Telecommunications Standards Institute). L'ETSI défini trois format de carte SIM. Le premier format est identifié par l'ETSI sous le format ID-1 UICC, il s'agit d'un format communément appelé « carte de crédit » qui est également définit dans la norme ISO 7816-1. Le deuxième format est identifié par l'ETSI sous le format Plug-in UICC, c'est le format le plus courant aujourd'hui avec une taille de carte de 25 mm par 15 mm, ce format est aussi appelé format de 2^{ème} génération ou encore format 2FF. Le troisième format est identifié par l'ETSI sous le format mini-UICC, c'est le format récemment introduit avec une taille de carte de 15 mm par 12 mm, ce format est aussi appelé format de troisième génération ou encore format 3FF.

Les fabricants de carte à puce ont l'habitude de fabriquer un corps de carte au format ID-1 UICC dans lequel sont placés des formats de corps de carte de taille Plug-in UICC et Mini-UICC imbriqués les uns dans les autres et séparés par les zones prédécoupées. Les zones prédécoupées peuvent être réalisées par une rainure de séparation entre les corps de cartes qui sont reliés entre eux par des bretelles ou par une prédécoupe dite périphérique.

La rainure de séparation est communément utilisée car elle permet d'avoir un bon maintien entre les cartes tout en autorisant une facilité de séparation en agissant bretelle par bretelle. Un inconvénient de cette technique provient cependant de la rainure dans le cas d'un usage de cette rainure entre le format 2FF et le format 3FF. En effet, certains connecteurs reçoivent la carte par glissement et disposent de plots de contact très fins qui viennent se coincer dans la rainure, endommageant ainsi le connecteur et rendant le téléphone inutilisable.

La découpe périphérique consiste en une prédécoupe par amincissement de tout le pourtour du corps de carte, laissant une épaisseur résiduelle plus fine que l'épaisseur de la carte. L'épaisseur d'une carte étant de 800µm, une telle prédécoupe laisse une épaisseur résiduelle de quelques centaines de µm. Ce type de prédécoupe remédie au problème posé exposé précédemment par la rainure de séparation entre les formats 2FF et 3FF. Cependant, la prédécoupe périphérique présente comme défaut d'être soit difficile à détacher lorsque la prédécoupe laisse une épaisseur de matière trop épaisse, soit sujette à un détachage intempestif lorsque l'épaisseur résiduelle est trop fine. Afin, d'assurer un haut rendement de fabrication, il convient de réaliser en outre une carte compatible avec un procédé de moulage par injection.

L'invention vise à proposer une nouvelle solution pour remédier aux problèmes exposés précédemment. Sur une carte à puce disposant d'un corps de carte d'un premier format de carte et d'un module électronique, le corps de carte comporte une ligne de prédécoupe entourant le module électronique et définissant un deuxième format de carte, ladite ligne de prédécoupe comportant une épaisseur de matière résiduelle inférieure à l'épaisseur du corps de carte. L'invention se caractérise par une épaisseur de matière résiduelle qui comporte une première épaisseur sur une première partie de la ligne de prédécoupe, au moins une deuxième épaisseur inférieure à la première épaisseur sur une deuxième partie de la ligne de prédécoupe et au moins une zone de changement d'épaisseur résiduelle. Ladite zone de changement d'épaisseur est une zone de changement d'épaisseur progressive pour passer de la première épaisseur à la deuxième épaisseur.

L'utilisation de la première épaisseur permet d'assurer le maintien de la carte sur la première partie permet d'éviter un détachement intempestif de la carte du deuxième format. L'utilisation d'une deuxième épaisseur plus fine permet d'avoir une partie plus facile à détacher pour amorcer le détachement. L'utilisation de la zone de changement d'épaisseur progressive facilite la réalisation du moule et permet d'avoir une augmentation d'effort progressif lors du détachement.

Préférentiellement, la première partie et la deuxième partie sont séparées par un axe de pivotement, ledit axe correspondant à un axe séparant sensiblement le deuxième format de corps de carte en deux parties sensiblement égales. L'axe de pivotement délimite la zone sur laquelle le détachement peut être amorcé.

L'épaisseur résiduelle peut être de forme asymétrique. L'épaisseur résiduelle peut être décentrée par rapport à l'épaisseur du corps de carte.

L'invention sera mieux comprise et d'autres particularités et avantage apparaîtront à la lecture de la description qui va suivre et à la vue des figures annexées parmi lesquelles :
- la figure 1 représente un premier format de carte à puce mettant en oeuvre l'invention,
- la figure 2 représente un deuxième format de carte à puce mettant en oeuvre l'invention,
- les figures 3 et 4 représentent différents détails pour pouvoir mieux appréhender l'invention,
- les figures 5 à 7 représentent des vues en coupe selon un plan passant par une rainure de prédécoupe,
- les figures 8 et 9 représentent des vues en coupe selon un plan perpendiculaire à une rainure de prédécoupe
- les figures 10 à 14 illustrent des variantes de réalisation

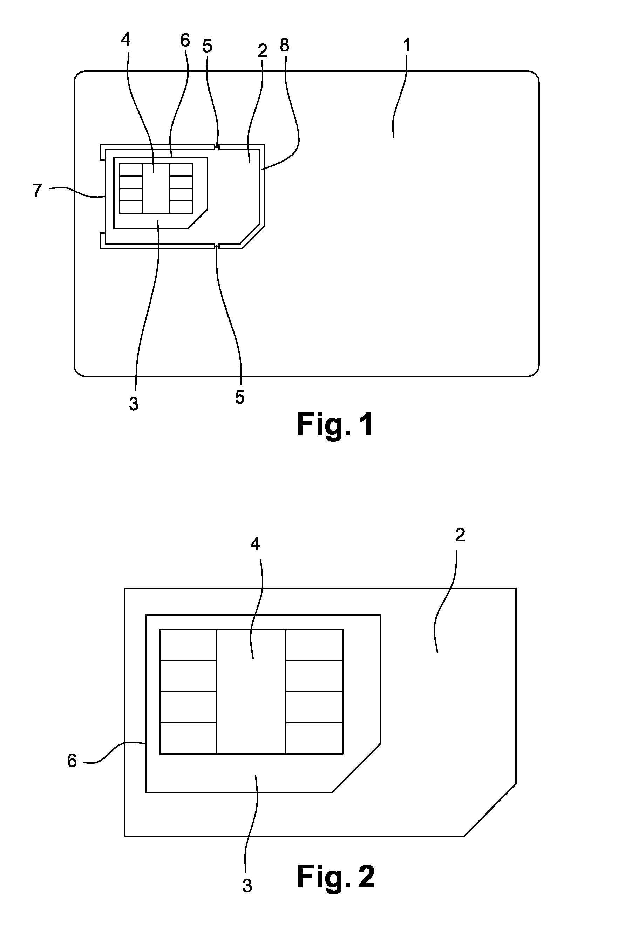

La figure 1 représente une carte à puce disposant d'un premier corps de carte 1 au format carte de crédit qui supporte un deuxième corps de carte 2 au format 2FF et un troisième corps de carte 3 au format 3FF. Un module électronique 4 est monté dans le troisième corps de carte. Le module électronique 4 est un module conventionnel composé d'un circuit intégré et d'un connecteur supportant six ou huit plages de contact. Les premier, deuxième, et troisième corps de carte sont délimités par des zones de ruptures 6 et 8. Les zones de ruptures définissent en outre les différent corps de carte et sont placées de sorte que le module électronique se trouve bien positionné sur les trois corps de cartes pris indépendamment les uns des autres, tel que cela est connu de l'état de la technique.

Le premier corps de carte 1 est séparé du deuxième corps de carte 2 par la première zone de rupture 8. Cette zone de rupture est constituée d'une rainure de séparation munie par exemple de trois bretelles 5 et 7, les bretelles 5 étant plus petites pour rompre facilement et permettre un pivotement selon l'amorce de rupture de la bretelle 7, jusqu'à la rupture de cette bretelle 7. Le deuxième corps de carte 2 est séparé du troisième corps de carte 3 par la deuxième zone de rupture 6. La deuxième zone de rupture est réalisée conformément à l'invention et va être détaillée par la suite.

La carte représentée sur la figure 1 correspond à une carte fabriquée et vendue au format ID-1. Toutefois, les cartes SIM peuvent être aussi fabriquées et vendues directement au format 2FF tel que représenté sur la figure 2. La carte est alors uniquement constituée du deuxième corps de carte 2 supportant le troisième corps de carte 3 séparé par la deuxième zone de rupture 6. L'invention portant essentiellement sur cette deuxième zone de rupture 6, par la suite on ne parlera plus du premier corps de carte 1 ni de la première zone de rupture 8 tout en considérant que ces deux éléments peuvent très bien être présents. On pourrait également mettre en oeuvre l'invention pour la première zone de rupture 8 bien qu'il n'y ait pas nécessairement besoin de le faire.

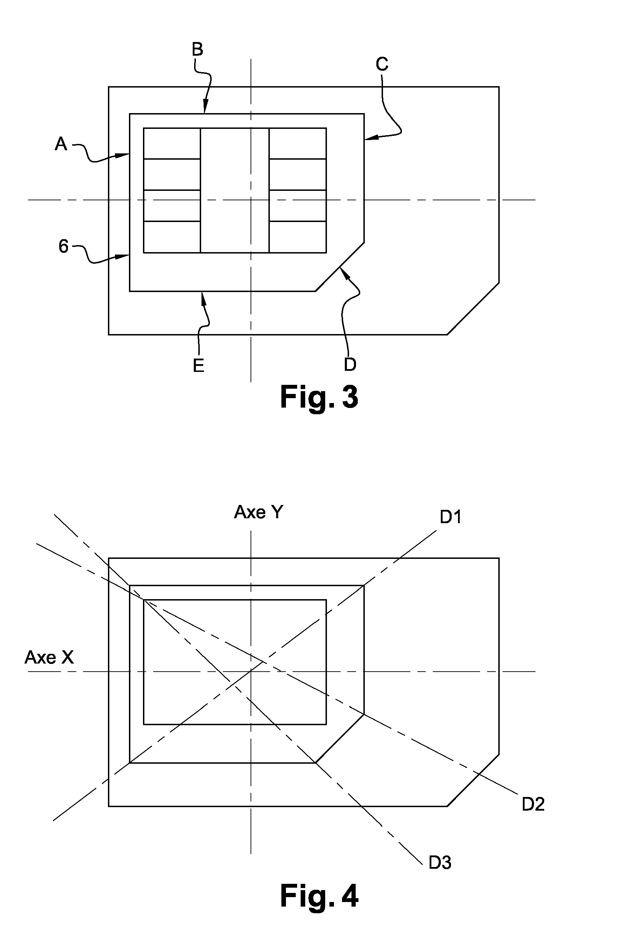

Sur la figure 3, on peut voir que la zone de rupture 6 correspond à une ligne de prédécoupe qui comporte cinq côté que l'on nomme A, B, C, D, E pour pouvoir s'y référer par la suite. Sur la figure 4, on a représenté cinq axes qui séparent sensiblement la surface du troisième corps de carte en deux parties sensiblement égales. Les axes X et Y correspondent aux axes médians du format 3FF, ils passent par le milieu du troisième corps de carte et sont parallèles aux bords dudit corps. Les axes D1, D2, D3 sont des droites qui passent par des sommets sensiblement opposé et définissent deux partie sensiblement de même surface. Dans ce contexte, le sensiblement égal peux correspondre à une égalité avec une tolérance de 10%, l'important étant que l'axe divise la carte en deux parties dont la surface reste significative.

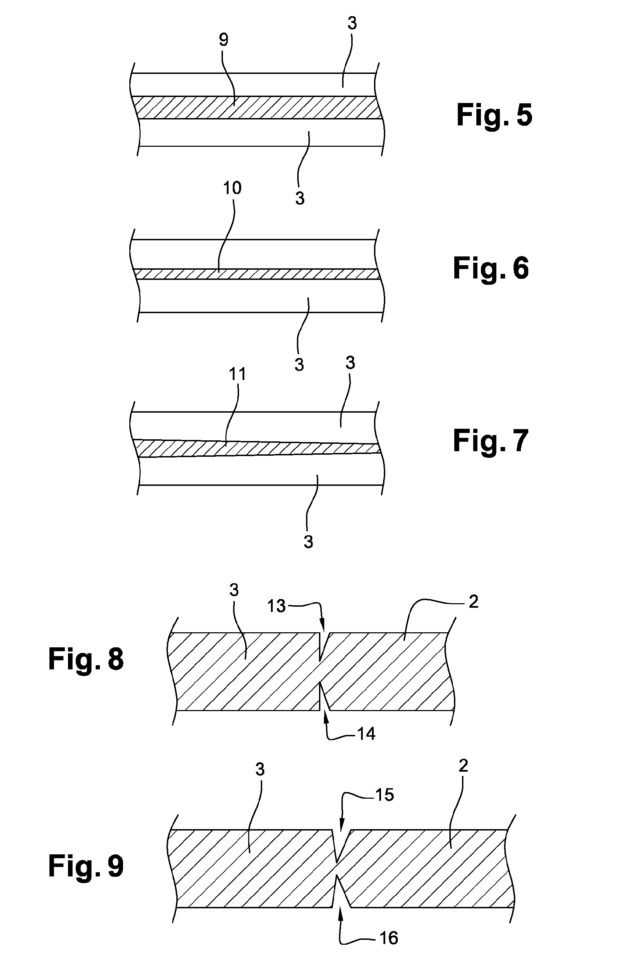

La zone de rupture 6 de l'invention est constituée d'une ligne de prédécoupe dont l'épaisseur de matière résiduelle comporte une première épaisseur 9 dite épaisse, par exemple de 200 µm et une deuxième épaisseur 10 dite fine, par exemple de 120 µm. La première épaisseur 9, illustrée sur la coupe de la figure 5, permet d'assurer un bon maintien de la carte. La deuxième épaisseur 10, illustrée sur la figure 6, permet d'avoir une prédécoupe plus facilement séparable. Astucieusement on peut utiliser l'un des axes X, Y, D1, D2 ou D3 comme axe de pivotement avec d'un coté de l'axe la première épaisseur et de l'autre coté de l'axe, la deuxième épaisseur.

A titre d'exemple si l'on considère l'axe Y comme axe de pivotement, il est possible d'avoir la première épaisseur sur le coté A et d'avoir la deuxième épaisseur sur les cotés C, D. Les côtés B et E supportent d'une part la première épaisseur et d'autre part la seconde épaisseur séparées par une zone de transition. L'utilisateur qui exerce une pression sur le troisième corps de carte va faire rompre les cotés C et D assez facilement. Si l'utilisateur est effectivement désireux de séparer les deuxième et troisième corps de carte il devra maintenir la pression sur le troisième corps de carte, les côtés C et D déjà séparés servant alors d'amorce de rupture pour les cotés B et E puis le côté A plus résistant. Il est à noté que le fait d'avoir déjà une partie de la carte séparée permet de réduire l'effort de détachement car le cisaillement se fait progressivement en remontant le long de la ligne de prédécoupe de la deuxième épaisseur et pas sur la totalité de la prédécoupe.

Si la pression exercée sur le troisième corps de carte n'était pas volontaire, les cotés C et D cédant indique à l'utilisateur qu'il risque de défaire les cartes. Heureusement, les côtés A, B et E plus résistants permettent de maintenir le troisième corps de carte 3 dans le deuxième corps de carte 2.

Ainsi, on réalise une ligne de prédécoupe qui peut éviter un détachement non souhaité tout en permettant une séparation aisée des deuxième et troisième corps de carte.

Dans le cas où l'on prendrait comme axe de pivotement l'axe D1, il y aura un changement d'épaisseur à cheval sur les côtés B et C d'une part et A et E d'autre part.

Afin de réaliser les cartes par moulage, il est préférable d'avoir une zone de transition progressive pour améliorer le dégagement du moule. La zone de transition progressive 11 est représentée sur la figure 7. Le changement progressif d'épaisseur a aussi pour avantage d'augmenter progressivement la force de cisaillement nécessaire au fur et à mesure que le troisième corps de carte se libère et donc au fur et à mesure que le bras de levier constitué par la partie détachée du troisième corps de carte augmente. Ce changement progressif peu être utilisé sur toute la longueur du côté ou seulement une partie du côté, par exemple 5 mm.

Il est à noter que les première et deuxième épaisseurs 9 et 10 peuvent varier en fonction de des surfaces entourées ainsi la première épaisseur peut par exemple varier entre 100 et 300 µm et la première épaisseur peut par exemple varier entre 30 et 230 µm. Ces épaisseurs peuvent aussi varier en fonction des matériaux utilisés. Typiquement, il convient d'avoir une différence entre les première et deuxième épaisseurs comprise entre 70 et 150 µm.

Pour ce qui est du profil de la prédécoupe, il est fait référence aux figure 8 et 9 qui montrent deux types de profil. Sur la figure 8, il est montré un profil dit en demi-V avec des rainures 13 et 14 symétriques de chaque coté de la carte. L'ouverture en surface du demi-V est proportionnelle à la profondeur de la rainure tout en étant très inférieur à cette profondeur de rainure.

Sur la figure 9, la ligne de prédécoupe est réalisée avec des rainures 15 et 16 en V l'ouverture de ces rainures est légèrement plus importante que les rainures en demi-V mais reste également très limitée. L'ouverture en V permet d'avoir également un meilleur dégagement du moule.

Quel que soit le profil choisi, l'ouverture en surface dépend de l'angle d'ouverture du V ou du demi-V qui peut être comprise entre 8° et 45° ainsi que de la profondeur de pénétration. Il est tout à fait possible de limiter à 300µm l'ouverture en surface. Avec une telle largeur d'ouverture, il y a peu de chance que des plots de contact d'un lecteur risquent de se coincer dans l'entaille lorsque la carte est utilisée avec le format 2FF.

En terme de réalisation, cette prédécoupe peut être réalisée par moulage. Le moule devra être réalisé en prenant en compte le profil de prédécoupe de l'invention puis le moulage s'effectuera normalement selon une technique connue. Bien entendu, le choix du type d'ouverture va dépendre des matériaux choisis pour le moule afin d'assurer le meilleur dégagement du moule.

L'homme du métier aura compris que de nombreuses variantes utilisant les deux épaisseurs de l'invention sont possibles. Notamment, l'utilisation de tous les axes indiqués est possible et d'autres axes peuvent également être utilisés comme axe de pivotement délimitant la zone avec la première épaisseur et la zone avec la deuxième épaisseur.

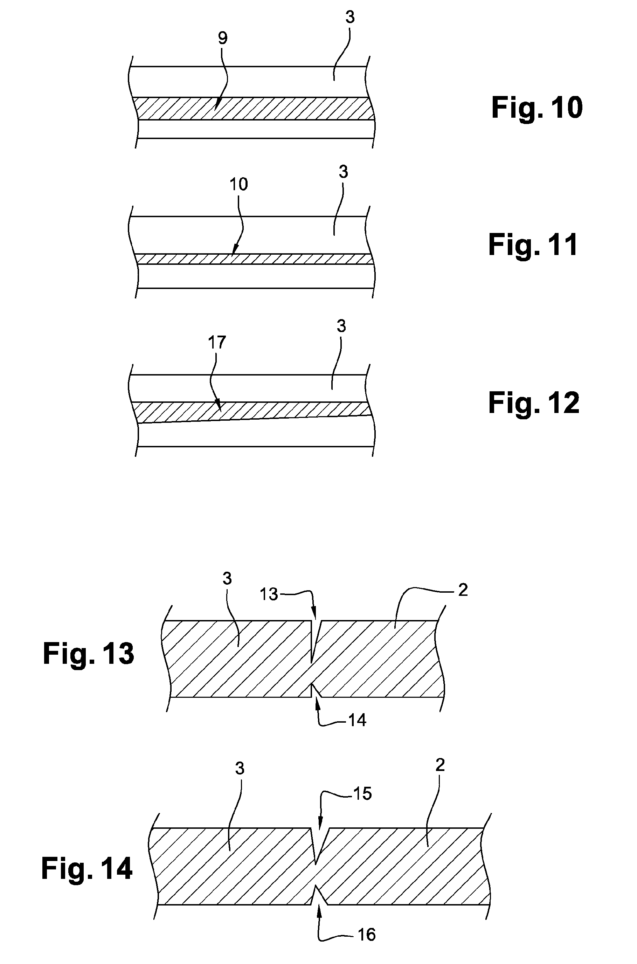

D'autres variantes peuvent aussi être prises en compte. Il est par exemple possible de ne pas avoir des entailles symétriques. Parce qu'il peut être moins couteux d'avoir une matrice moulage n'ayant aucune variation de hauteur, on peut avoir recours à des profile de rainure asymétrique. Ainsi les première et deuxième épaisseurs 9 et 10 peuvent se trouver désaxées comme représentée sur les figures 10 et 11. Une seule matrice du moule assurera la variation d'épaisseur. Ainsi le changement progressif 17 ne se fait également que sur un seul côté, l'autre côté ne changeant pas de niveau.

Il est également possible d'avoir une dissymétrie des rainures 13 à 16, comme montré sur les figures 13 et 14, uniquement pour assurer d'un coté une rainure 14 ou 16 d'ouverture limitée et constante, par exemple du côté des contacts. L'épaisseur résiduelle se trouve alors décentrée par rapport à l'épaisseur du corps de carte. Cela permet de limiter encore plus le risque de coincement d'un plot de contact.

## Revendications

1. Carte à puce disposant d'un corps de carte (2) d'un premier format de carte et d'un module électronique (4), le corps de carte comportant une ligne de prédécoupe (6) entourant le module électronique (4) et définissant un deuxième format de carte (3), ladite ligne de prédécoupe (6) comportant une épaisseur de matière résiduelle inférieure à l'épaisseur du corps de carte, **caractérisé en ce que** l'épaisseur de matière résiduelle comporte une première épaisseur (9) sur une première partie de la ligne de prédécoupe (6), au moins une deuxième épaisseur (10) inférieure à la première épaisseur (9) sur une deuxième partie de la ligne de prédécoupe et au moins une zone (11, 17) de changement d'épaisseur résiduelle, ladite zone de changement d'épaisseur étant une zone de changement d'épaisseur progressive (11, 17) pour passer de la première épaisseur à la deuxième épaisseur.

2. Carte selon la revendication 1, dans laquelle la première partie et la deuxième partie sont séparées par un axe de pivotement (X, Y, D1, D2, D3), ledit axe correspondant à un axe séparant sensiblement le deuxième format de corps de carte en deux parties sensiblement égales.

3. Carte selon la revendication 1, dans laquelle l'épaisseur résiduelle est de forme asymétrique.

4. Carte selon la revendication 1, dans laquelle l'épaisseur résiduelle est décentrée par rapporte à l'épaisseur du corps de carte.

5. Carte selon la revendication 1, laquelle étant obtenue par moulage.
